# EUROPEAN PATENT SPECIFICATION

(11) **EP 4 563 332 B1**
(45) Date of publication and mention of the grant of the patent: **11.03.2026**
(21) Application number: 24202443.8
(22) Date of filing: 25.09.2024
(51) Int. Cl.: B29C 70/38, C04B 35/80, B28B 1/30, B28B 11/00, B29B 13/02, B28B 23/00, B32B 18/00

(54) **CERAMIC MATRIX COMPOSITE STRUCTURES AND METHODS FOR MANUFACTURE THEREOF**
KERAMIKMATRIXVERBUNDSTRUKTUREN UND VERFAHREN ZUR HERSTELLUNG DAVON
STRUCTURES COMPOSITES À MATRICE CÉRAMIQUE ET LEURS PROCÉDÉS DE FABRICATION

(30) Priority: 29.11.2023 US 202363603915 P; 22.01.2024 NL 2036858
(43) Date of publication of application: 04.06.2025
(73) Proprietor: The Boeing Company, Arlington, VA 22202 (US)
(72) Inventor: Wienhold, Erik N., ARLINGTON, 22202 (US); Heng, Sangvavann, ARLINGTON, 22202 (US); Trowbridge, Michael J., ARLINGTON, 22202 (US); Smith, Brian J., ARLINGTON, 22202 (US); Johnson, Brice A., ARLINGTON, 22202 (US); Zgherea, Lisa C., ARLINGTON, 22202 (US); Brown, Cristopher R., ARLINGTON, 22202 (US); Fritzke, Ricardo A., ARLINGTON, 22202 (US)
(74) Representative: Arnold & Siedsma

(56) References cited:
- WO-A1-2014/094903
- WO-A1-2020/081348
- US-A1- 2017 320 785
- US-A1- 2021 155 552
- US-A1- 2023 234 892

## Description

The present application relates to composite structures and, more particularly, to ceramic matrix composite structures and methods for manufacture thereof.

Ceramic matrix composites have different tack and texture than polymer matrix composites that require different methods of processing. Ceramic fibers of ceramic matrix composites are more brittle and stiffer than carbon fibers of polymer matrix composites. More brittle and stiffer fibers along with different organic tackifier constituent resin of the ceramic fibers require different methods of processing during manufacture of ceramic matrix composite structures.

A typical ceramic matrix composite structure is manufactured using a hand-layup process. A drawback in using a hand-layup process to manufacture a ceramic matrix composite structure is variability of quality and consistency of the ceramic matrix composite structure. As such, manual inspection and rework are often required. Another drawback is that the hand-layup process is time-intensive and requires skilled technicians. The overall result is increased cycle time as well as increased labor costs to manufacture the ceramic matrix composite structure.

The abstract of WO2014/094903 states: "A fabric handling apparatus includes a layup table, a mold disposed adjacent to the layup table, and a fabric handling array suspended above the layup table and the mold. The fabric handling array is adapted to transfer at least one fabric shape from the layup table to the mold. The fabric handling array includes a plurality of attractors in an attractor array. An orientation of the fabric handling array is alterable with respect to at least one of the layup table and the mold so that the at least one fabric shape is positionable on the mold in a predetermined orientation".

Despite advances already made, those skilled in the art continue with research and development efforts in the field of manufacturing ceramic matrix composite structures.

In one aspect, an electronically-controlled method is provided for manufacturing a non-polymer structure with a desired shape. The electronically-controlled method comprises transporting a stack comprising of at least a first non-polymer ply and a second non-polymer ply from a surface at a first location to a tool surface at a second location, which is different from the first location, to enable the stack of at least the first non-polymer ply and the second non-polymer ply to be manufactured as the non-polymer structure with the desired shape at the second location.

In another aspect, an electronically-controlled method is provided for manufacturing a ceramic matrix composite structure with a desired shape. The electronically-controlled method comprises processing at a first location a plurality of ceramic matrix composite plies to form a stack of the plurality of ceramic matrix composite plies. The electronically-controlled method also comprises transporting the stack of plurality of ceramic matrix composite plies from the first location to a second location which is remote from the first location. The electronically-controlled method further comprises processing at the second location the stack of plurality of ceramic matrix composite plies to provide the ceramic matrix composite structure with the desired shape. This aspect may be combined with the previously described aspect or may be provided as a separate aspect that is independent from the previously described aspect.

In yet another aspect, an electronically-controlled method is provided for manufacturing a ceramic matrix composite structure with a desired shape. The electronically-controlled method comprises picking a first ceramic matrix composite ply that is sandwiched between a first bottom backing film and a first top backing film, and placing the first ceramic matrix composite ply on a table surface at a first location. The electronically-controlled method also comprises peeling away the first top backing film from a top surface of the first ceramic matrix composite ply, and picking a second ceramic matrix composite ply that is sandwiched between a second bottom backing film and a second top backing film. The electronically-controlled method further comprises peeling away the second bottom backing film from a bottom surface of the second ceramic matrix composite ply, and placing the bottom surface of the second ceramic matrix composite ply on the top surface of the first ceramic matrix composite ply to form a stack of at least the first and second ceramic matrix composite plies. The electronically-controlled method also comprises transporting the stack of at least the first and second ceramic matrix composite plies from the table surface at the first location to a tool surface at a second location which is different from the first location to enable the stack of at least the first and second ceramic matrix composite plies to be manufactured as the ceramic matrix composite structure with the desired shape at the second location. This aspect may be combined with one or both of the previously described aspect or may be provided as a separate aspect that is independent from both previously described aspects.

Other aspects will become apparent from the following detailed description, the accompanying drawings and the appended claims.
Fig. 1 is schematic block diagram of an apparatus for manufacturing a ceramic matrix composite structure in accordance with an embodiment.
Fig. 2A is an elevational view of a first non-polymer ply that is processed to provide a ceramic matrix composite structure.
Fig. 2B is an elevational view of a second non-polymer ply that is processed with the first non-polymer ply of Fig. 2A to provide a ceramic matrix composite structure.
Figs. 3A-3M are elevational views showing certain components of the manufacturing apparatus of Fig. 1 in different positions during manufacture of a ceramic matrix composite structure.
Fig. 4A is an enlarged elevational view of an example stack of ceramic matrix composite plies provided in accordance with Figs. 3A-3F.
Fig. 4B is an enlarged elevational view of an example compacted stack of ceramic matrix composite plies provided in accordance with Figs. 3G-3I.
Fig. 5 is an enlarged elevational view of an example ceramic matrix composite structure manufactured in accordance with Figs. 3J-3M.
Fig. 6 is an overall flow diagram depicting an example method for manufacturing a ceramic matrix composite structure in accordance with an embodiment.
Fig. 7 is a flow diagram depicting an example electronically-controlled method for manufacturing a non-polymer structure with a desired shape in accordance with an embodiment.
Fig. 8 is a flow diagram depicting an example electronically-controlled method for manufacturing a ceramic matrix composite structure with a desired shape in accordance with another embodiment.
Fig. 9 is a flow diagram depicting an example electronically-controlled method for manufacturing a ceramic matrix composite structure with a desired shape in accordance with yet another embodiment.
Fig. 10 is a flow diagram of an aircraft manufacturing and service methodology.
Fig. 11 is a block diagram of an aircraft.

The present application is directed to ceramic matrix composite structures and methods for manufacture thereof. The specific construction of the ceramic matrix composite structures and methods for manufacture thereof and the industry in which the structures and methods are implemented may vary. It is to be understood that the disclosure below provides a number of embodiments or examples for implementing different features of various embodiments. Specific examples of components and arrangements are described to simplify the present disclosure. These are merely examples and are not intended to be limiting.

By way of example, the disclosure below describes ceramic matrix composite structures and methods for manufacturing at least a portion of an aircraft, such as an aircraft exhaust structure. The ceramic matrix composite structures and methods for manufacture thereof may be implemented by an original equipment manufacturer (OEM) in compliance with commercial, military, and space regulations. It is conceivable that the disclosed ceramic matrix composite structures and methods for manufacture thereof may be implemented in many other ceramic matrix composite manufacturing industries.

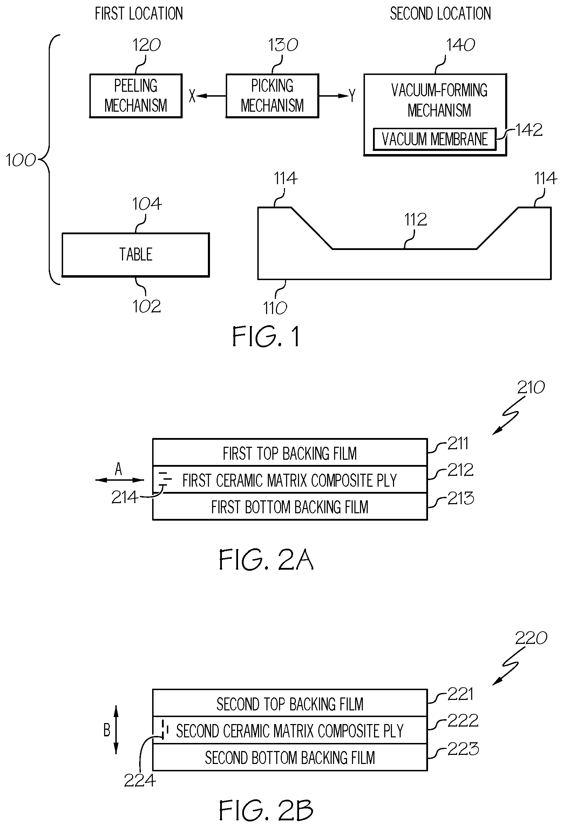

Referring to Fig. 1, a schematic block diagram of an apparatus 100 for manufacturing a ceramic matrix composite structure in accordance with an embodiment is illustrated. The apparatus 100 comprises a table 102 having a table surface 104 at a first location, and a tool 110 having a tool surface 112 at a second location which is different (i.e., remote) than the first location. The table surface 104 may comprise a releasable vacuum or electrostatics that is capable of holding a first ply of material in position on the table surface 104 while other plies of material are placed and compacted on that first ply. As an example, the table surface 104 may comprise a valve-actuated vacuum table. The tool surface 112 has optional steps 114 in vicinity of the perimeter of the tool 110. The apparatus 100 further comprises a number of mechanisms including a peeling mechanism 120, a picking mechanism 130, and a vacuum-forming mechanism 140. The peeling mechanism 120 is at the first location where the table 102 is located.

The picking mechanism 130 is a gripper end effector for picking and placing a sheet (e.g., a ply) of material on the table surface 104 of the table 102 or the tool surface 112 of the tool 110. The picking mechanism 130 may comprise electrostatic grippers or vacuum grippers, for example. The picking mechanism 130 is movable in opposite directions indicated by arrows X and Y between the first location where the table 102 is located and the second location where the tool 110 is located. The vacuum-forming mechanism 140 includes a vacuum membrane 142, and is located at the second location where the tool 110 is located. Structure and operation of peeling mechanisms, picking mechanisms, and vacuum-forming mechanism are known and conventional and, therefore, will not be described.

Although only one picking mechanism is shown in Fig. 1 (i.e., the picking mechanism 130), it is conceivable that two picking mechanisms be provided in which one picking mechanism is associated with the first location and the other picking mechanism is associated with the second location. It is also conceivable that two peeling mechanisms be provided, with one peeling mechanism being associated with the first location and the other peeling mechanism being associated with the second location. For simplicity and purpose of explanation, only one picking mechanism and only one peeling mechanism, as shown in Fig. 1, will be used and described herein.

Referring to Fig. 2A, an elevational view of a first non-polymer ply 210 that is processed to provide a ceramic matrix composite structure is illustrated. The first non-polymer ply 210 includes a first ceramic matrix composite ply 212 that is sandwiched between a first top backing film 211 and a first bottom backing film 213. The first ceramic matrix composite ply 212 has first fiber reinforcements 214 that are oriented in a first direction shown as arrow A in Fig. 2A. The first fiber reinforcements 214 comprise ceramic fibers, and the matrix is a ceramic-based material. Alternatively, the first ceramic matrix composite ply 212 may comprise a ceramic matrix composite ply having a fabric that is pre-impregnated with a matrix material, such as C_{f}/Si or SiC_{f}/SiC for example.

The first ceramic matrix composite ply 212 is a non-polymer material, and has a viscosity between about 3000 Poise and 7000 Poise. Tackiness of the first ceramic matrix composite ply 212 may vary as a function of an amount of water contained in the first ceramic matrix composite ply 212. Alternatively, tackiness of the first ceramic matrix composite ply 212 may vary as a function of an amount of solvent (e.g., non-water based) contained in the first ceramic matrix composite ply 212. Other water-based and non-water based compounds are possible. The weight of the first ceramic matrix composite ply 212 for a given volume of the first ceramic matrix composite ply 212 is less than weight of an equivalent volume of metal material, such as steel for example.

Referring to Fig. 2B, an elevational view of a second non-polymer ply 220 that is processed with the first non-polymer ply 210 of Fig. 2A to provide a ceramic matrix composite structure is illustrated. The second non-polymer ply 220 includes a second ceramic matrix composite ply 222 that is sandwiched between a second top backing film 221 and a second bottom backing film 223. The second ceramic matrix composite ply 222 has second fiber reinforcements 224 that are oriented in a second direction shown as arrow B in Fig. 2B. The second direction B of the second fiber reinforcements 224 is transverse (e.g., perpendicular) to the first direction A of the first fiber reinforcements 214. It is conceivable that the second direction B of the second fiber reinforcements 224 be non-transverse (e.g., parallel) to the first direction A of the first fiber reinforcements 214. The second fiber reinforcements 224 comprise ceramic fibers, and the matrix is a ceramic-based material. Alternatively, the second ceramic matrix composite ply 222 may comprise a ceramic matrix composite ply having a fabric that is pre-impregnated with a matrix material, such as C_{f}/Si or SiC_{f}/SiC for example.

The second ceramic matrix composite ply 222 is a non-polymer material, and has a viscosity between about 3000 Poise and 7000 Poise. Tackiness of the second ceramic matrix composite ply 222 may vary as a function of an amount of water contained in the second ceramic matrix composite ply 222. Alternatively, tackiness of the second ceramic matrix composite ply 222 may vary as a function of an amount of solvent (e.g., non-water based) contained in the second ceramic matrix composite ply 222. Other water-based and non-water based compounds are possible. The weight of the second ceramic matrix composite ply 222 for a given volume of the second ceramic matrix composite ply 222 is less than weight of an equivalent volume of metal material, such as steel for example.

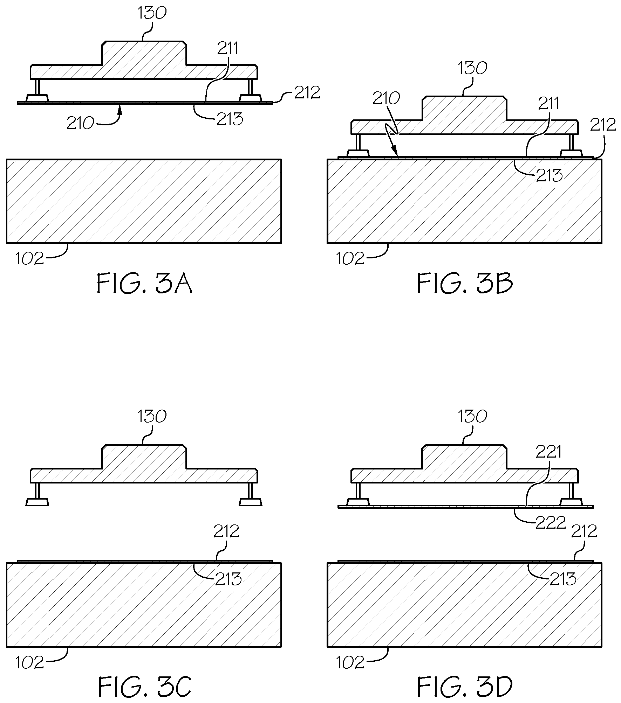

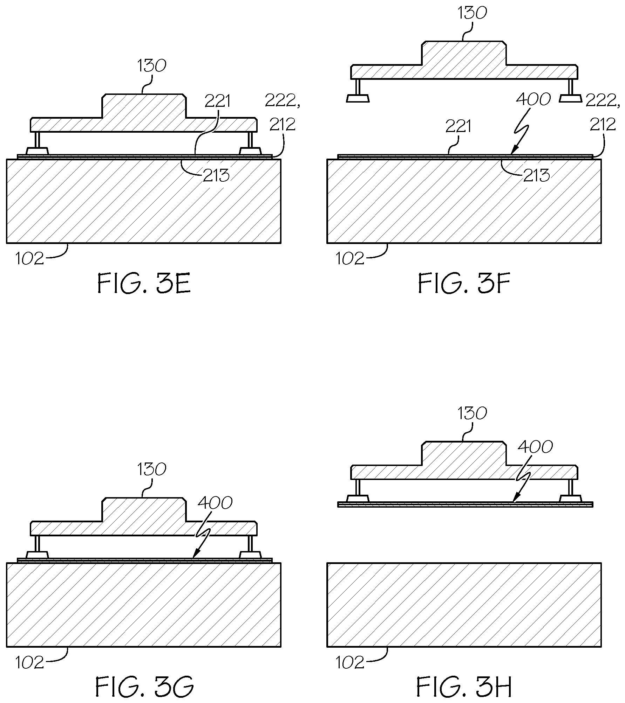

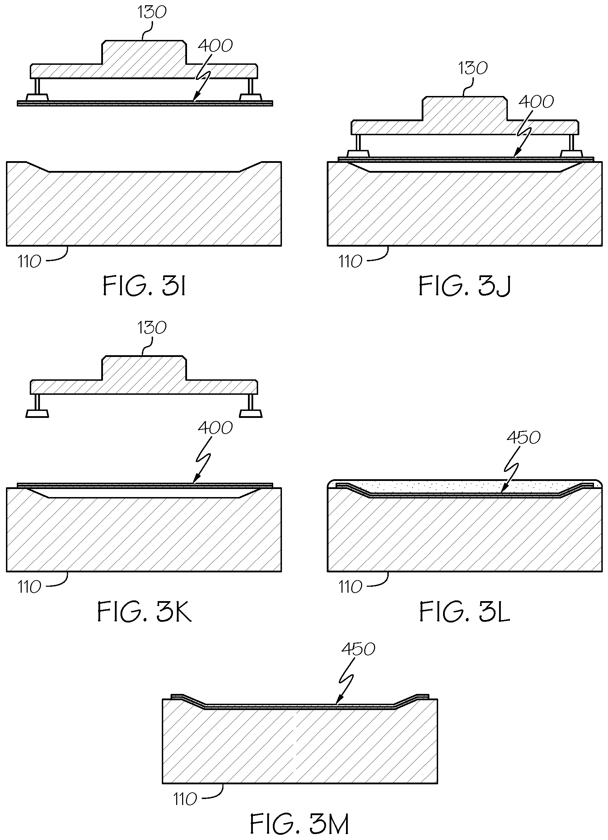

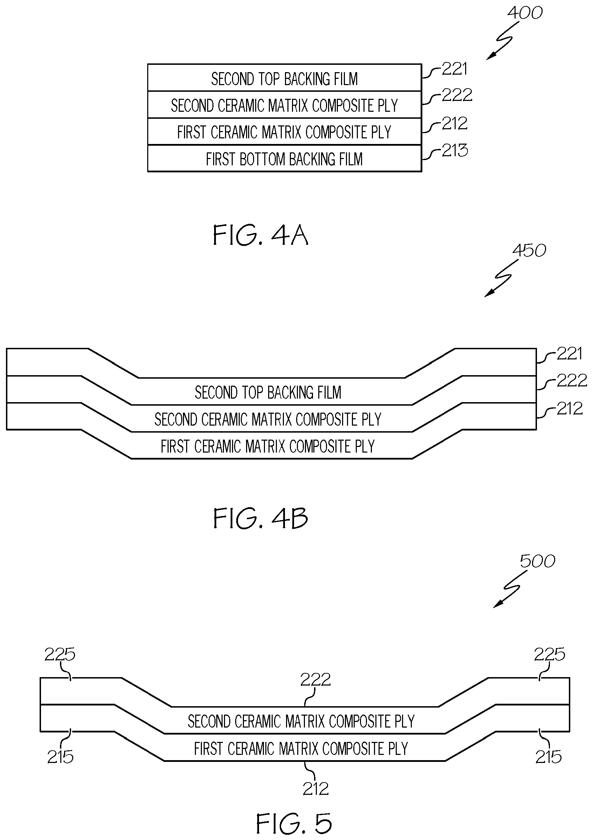

Referring to Figs. 3A-3M, elevational views show certain components of the manufacturing apparatus 100 of Fig. 1 in different positions during manufacture of a ceramic matrix composite structure. From an overview, Figs. 3A-3F show the first non-polymer ply 210 and the second material ply 220 of Figs. 2A and 2B being processed to provide a stack 400 (shown in Fig. 4A) that comprises the second top backing film 221, the first and second ceramic matrix composite plies 212, 222, and the first bottom backing film 213. Figs. 3G-3I show the stack 400 being processed to transport the stack 400 from the table 102 at the first location to the tool 110 at the second location. Figs. 3J-3M show the stack 400 being processed to provide a compacted stack 450 (shown in Fig. 4B) and thereby to manufacture a ceramic matrix composite structure (shown in Fig. 5) that comprises the first and second ceramic matrix composite plies 212, 222 shaped as shown in Fig. 5.

As shown in Fig. 3A, the picking mechanism 130 is picking up the first non-polymer ply 210 (Fig. 2A) comprising the first ceramic matrix composite ply 212, the first bottom backing film 213, and the first top backing film 211. As shown in Fig. 3B, the picking mechanism 130 lowers the first non-polymer ply 210 onto the table 102. The picking mechanism 130 is then lifted away from the table 102 and the peeling mechanism 120 removes the first top backing film 211, as shown in Fig. 3C, leaving behind the first ceramic matrix composite ply 212 and the first bottom backing film 213 on the table 102. Then, after the peeling mechanism 120 removes the second bottom backing film 223 from the second material ply 220, the second ceramic matrix composite ply 222 along with the second top backing film 221 is positioned over the table 102, as shown in Fig. 3D. Thus, the picking mechanism 130 in Fig. 3D is holding up the second ceramic matrix composite ply 222 and the second top backing film 221.

As shown in Fig. 3E, the picking mechanism 130 lowers the second ceramic matrix composite ply 222 and the second top backing film 221 onto the first ceramic matrix composite ply 212 that is already on the table 102 to compact together the first and second ceramic composite plies 212, 222. The picking mechanism 130 is then lifted away from the table 102 as shown in Fig. 3F, leaving behind the stack 400 (Fig. 4A) that comprises the second ceramic matrix composite ply 222 and the second top backing film 221 on top of the first ceramic matrix composite ply 212 and the first bottom backing film 213. Sufficient pressure is applied on the stack 400 to enable handling of the stack 400, but not too much to prevent forming of the stack 400 to a final tool contour.

Then, the picking mechanism 130 is lowered onto the stack 400 as shown in Fig. 3G to lift the stack 400 away from the table 102 as shown in Fig. 3H. The picking mechanism 130 then moves from the first location where the table 102 is located, as shown in Fig. 3H, to the second location where the tool 110 is located, as shown in Fig. 3I.

After the first bottom backing film 213 is removed (which is optional at this manufacturing point), the picking mechanism 130 then lowers the stack 400 (minus the first bottom backing film 213 if it has been removed) onto the tool 110 as shown in Fig. 3J. After the picking mechanism 130 is lifted away as shown in Fig. 3K, the vacuum membrane 142 (Fig. 1) is positioned over the tool 110, referred to as "bagging" the stack 400 with the vacuum membrane 142. The vacuum-forming mechanism 140 applies a vacuum to compact the stack 400 of Fig. 4A (minus the first bottom backing film 213 if it has been removed) to the shape of the tool 110 to provide a compacted stack 450, as shown in Fig. 3L. The compacted stack 450 is shown enlarged in Fig. 4B.

After the stack 400 of Fig. 4A (minus the first bottom backing film 213 if it has been removed) is formed to the shape of the tool 110 to provide the compacted stack 450 of Fig. 4B, the vacuum and the vacuum membrane 142 are removed, leaving behind the compacted stack 450 on the tool 110, as shown in Fig. 3M. Thus, the compacted stack 450 shown in Fig. 3M and Fig. 4B is formed to the shape of the tool 110.

When the second top backing film 221 is removed from the compacted stack 450, the result is a ceramic matrix composite structure 500 as shown in Fig. 5. The ceramic matrix composite structure 500 comprises the shaped second ceramic matrix composite ply 222 and the shaped first ceramic matrix composite ply 212. The first fiber reinforcements 214 (Fig. 2A) of the first ceramic matrix composite ply 212 and the second fiber reinforcements 224 (Fig. 2B) of the second ceramic matrix composite ply 222 are oriented relative to each other during placement of the first and second ceramic matrix composite plies 212, 222 onto the table 102 at the first location such that the first and second fiber reinforcements 214, 224 reinforce each other.

In the ceramic matrix composite structure 500, the shaped first ceramic matrix composite ply 212 has optional flanges 215, and the shaped second ceramic matrix composite ply 222 has optional flanges 225. The optional flanges 215, 225 depend upon shape of the tool surface 112 of the tool 110, and whether the optional steps 114 (Fig. 1) are provided in vicinity of the perimeter of the tool 110. The optional flanges 215, 225 provide an attachment interface for installing the ceramic matrix composite structure 500.

As an example, an aircraft part or a portion of an aircraft may comprise the ceramic matrix composite structure 500 including the optional flanges 215, 225. Aircraft includes missiles, launch vehicles, high-speed aircraft, and rockets, for example. Aircraft parts include engine exhaust structures, for example. Other types of aircraft and other aircraft parts or systems are possible.

Although the above-described example ceramic matrix composite structure 500 contains two plies (i.e., the first ceramic matrix composite ply 212 and the second ceramic matrix composite ply 222), it is conceivable that a ceramic matrix composite structure contains three or more plies. It is also conceivable that a ceramic matrix composite structure contains only one ply.

Also, although the above description describes the first bottom backing film 213 being removed prior to the stack 400 of Fig. 4A being compacted to the shape of the tool 110, it is conceivable that the first bottom backing film 213 be removed after the stack 400 has been compacted. For example, the compacted stack 450 of Fig. 4B plus the first bottom backing film 213 (assuming that the first bottom backing film 213 was not previously removed) may need to be moved to a curing tool at another location to allow the compacted stack 450 to cure. In this case, the first bottom backing film 213 can be removed after the compacted stack 450 has been formed.

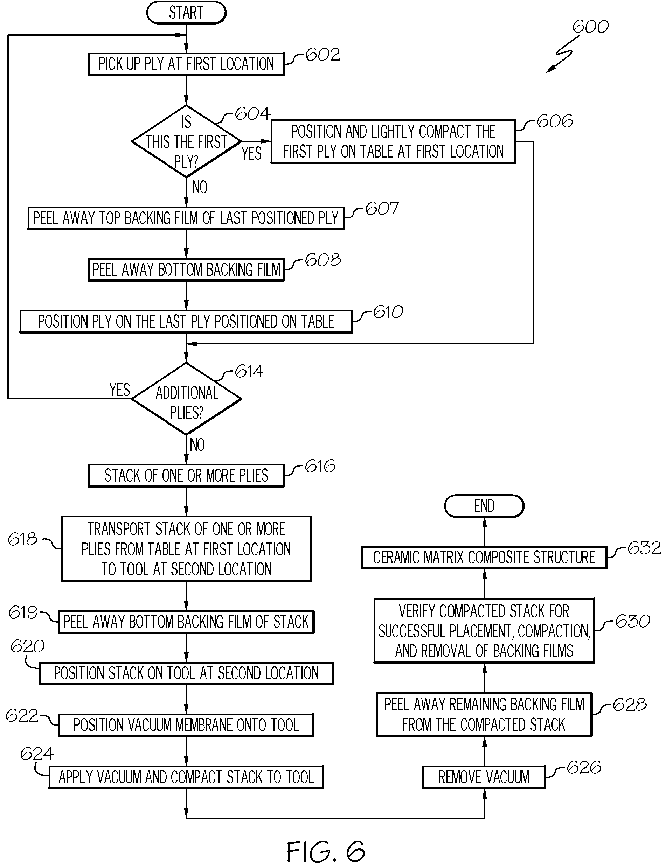

Referring to Fig. 6, an overall flow diagram 600 depicts an example method for manufacturing a ceramic matrix composite structure in accordance with an embodiment. In block 602, a ceramic matrix composite ply is picked up at a first location before proceeding to block 604. In block 604, a determination is made as to whether the ceramic matrix composite ply picked up in block 602 is the first ply picked. If the determination in block 604 is affirmative (i.e., it is the first ply picked), the process proceeds to block 606 in which the first ply picked is positioned and lightly compacted on a table at the first location before the process proceeds to block 614.

However, if the determination back in block 604 is negative (i.e., it is not the first ply picked), the process proceeds to block 607 to peel away a top backing film of the last ply that was positioned on the table at the first location. The process then proceeds to block 608 in which a bottom backing film of the picked ply of block 602 is peeled away. Then in block 610, the picked ply from block 602 is positioned on the last ply that was positioned on the table. The process proceeds to block 614.

In block 614, a determination is then made as to whether another ceramic matrix composite ply is to be added for the manufacturing of the ceramic matrix composite structure. If the determination in block 614 is affirmative (i.e., another ceramic matrix composite ply is to be added), the process returns to block 602 to process the next ceramic matrix composite ply. However, if the determination in block 614 is negative (i.e., there is no additional ceramic matrix composite ply), the process proceeds to block 616 in which a stack of one or more ceramic matrix composite plies is provided. The process then proceeds to block 618.

In block 618, the stack of one or more plies from block 616 is transported (i.e., moved) from the first location where the table is located to a second location where a tool is located. After a bottom backing film of the stack is removed, as shown in block 619, the stack of one or more plies is positioned on the tool at the second location, as shown in block 620.

A vacuum membrane is positioned on the tool at block 622, and a vacuum is then applied, as shown in block 624, to compact the stack of ceramic matrix composite plies to the tool. The process proceeds to block 626 in which the vacuum is removed before any remaining backing film including the top backing film of the last positioned ply is peeled away from the compacted stack as shown in block 628. The process proceeds to block 630 in which in-situ inspection is provided to verify the compacted stack for successful placement, compaction, and removal of backing films. After inspection, the process proceeds to block 632 in which the ceramic matrix composite structure is provided. The ceramic matrix composite structure contains at least one ceramic matrix composite ply plus any ceramic matrix composite plies added in block 614. The process then ends.

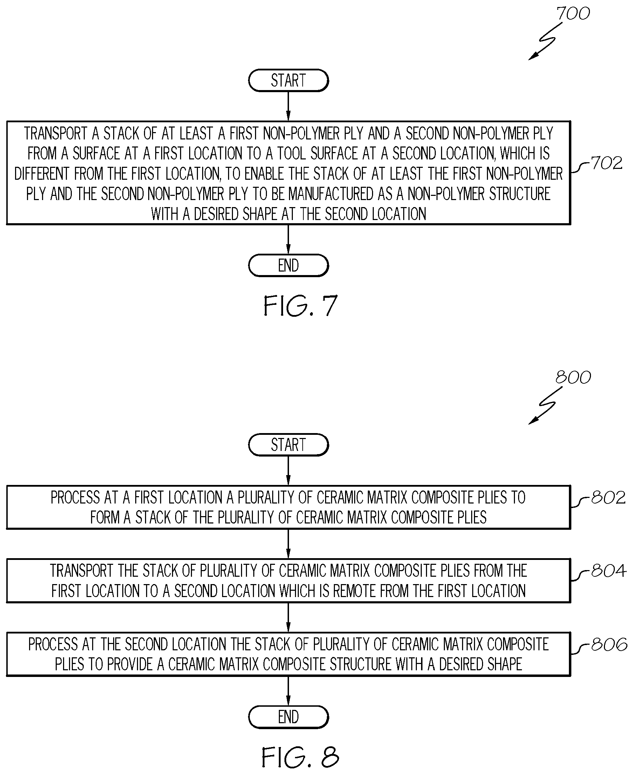

Referring to Fig. 7, a flow diagram 700 depicts an example electronically-controlled method for manufacturing a non-polymer structure with a desired shape in accordance with an embodiment. In block 702, a stack of at least first and second non-polymer plies of material is transported from a surface at a first location to a tool surface at a second location which is different from the first location to enable the stack of at least first and second non-polymer plies of material to be manufactured as the non-polymer structure with the desired shape at the second location. The process then ends.

Referring to Fig. 8, a flow diagram 800 depicts an example electronically-controlled method for manufacturing a ceramic matrix composite structure with a desired shape in accordance with another embodiment. In block 802, a plurality of ceramic matrix composite plies is processed at a first location to form a stack of the plurality of ceramic matrix composite plies. The process proceeds to block 804 in which the stack of plurality of ceramic matrix composite plies is transported from the first location to a second location which is remote from the first location. Then, in block 806, the stack of plurality of ceramic matrix composite plies is processed at the second location to provide the ceramic matrix composite structure with the desired shape. The process then ends.

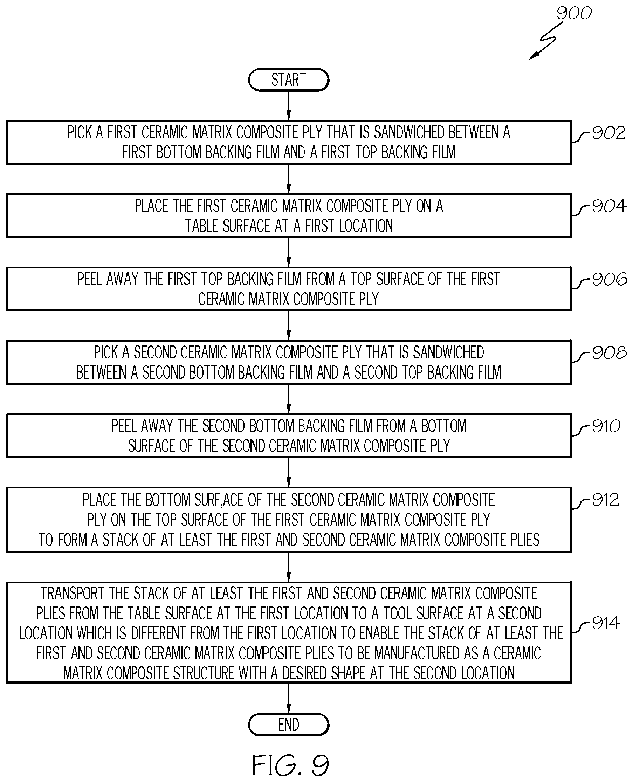

Referring to Fig. 9, a flow diagram 900 depicts an example electronically-controlled method for manufacturing a ceramic matrix composite structure with a desired shape in accordance with another embodiment. In block 902, a first ceramic matrix composite ply that is sandwiched between a first bottom backing film and a first top backing film is picked. Then in block 904, the first ceramic matrix composite ply is placed on a table surface at a first location. The process proceeds to block 906 in which the first top backing film is peeled away from a top surface of the first ceramic matrix composite ply. The process proceeds to block 908.

In block 908, a second ceramic matrix composite ply that is sandwiched between a second bottom backing film and a second top backing film is picked. Then, in block 910, the second bottom backing film is peeled away from a bottom surface of the second ceramic matrix composite ply before proceeding to block 912.

In block 912, the bottom surface of the second ceramic matrix composite ply is placed on the top surface of the first ceramic matrix composite ply to form a stack of at least the first and second ceramic matrix composite plies. Then, in block 914, the stack of at least the first and second ceramic matrix composite plies is transported from the table surface at the first location to a tool surface at a second location which is different from the first location to enable the stack of at least first and second ceramic matrix composite plies to be manufactured as the ceramic matrix composite structure with the desired shape at the second location.

A number of advantages result by providing the above-described ceramic matrix composite structures (e.g., the ceramic matrix composite structure 500 shown in Fig. 5) and the manufacturing methods therefor. One advantage is that the laying up of ceramic matrix composite plies onto a tool is a fully automated process. Placement and compaction of plies are automated, and in-situ inspection of quality measures is provided. Quality measures that can be inspected in-situ include, but are not limited to, ply location, fiber orientation, un-compacted regions, rework path determination, and large defects of different types and sizes.

Another advantage is that both first time quality and final product consistency are improved since placement and compaction of ceramic matrix composite plies onto a tool are automated. The result is reduced rework, reduced touch labor, reduced cycle time, and therefore reduced overall manufacturing costs.

Yet another advantage is that weight of a structure made of a ceramic-based material (e.g., the ceramic matrix composite structure 500 of Fig. 5) is less than weight of the same structure made of a non-ceramic-based material, such as metal for example. Moreover, the capability of the ceramic-based material to withstand high temperatures during operational use of the structure is much higher than the capability of non-ceramic-based materials to withstand the same high temperatures. A ceramic-based material is capable of withstanding temperatures up to 2400 degrees Fahrenheit. The high-temperature capability of the ceramic-based material allows a structure made of this material, such as a heat-shielding aircraft part or an aircraft exhaust structure, to be exposed to constant high temperatures (e.g., 1500 degrees Fahrenheit which is beyond limitation for most metals) during operational use of the structure. Thus, not only do ceramic matrix composite structures manufactured in accordance with the present disclosure have desirable weight advantages, but also have desirable thermal characteristics in applications where weight and thermal characteristics are considered important.

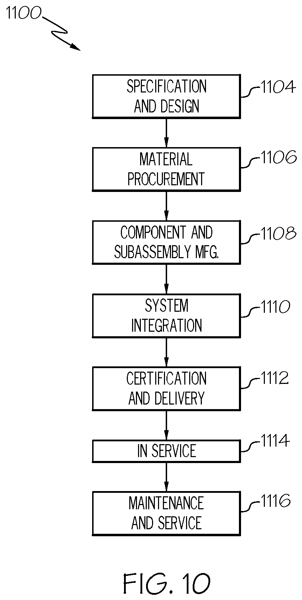

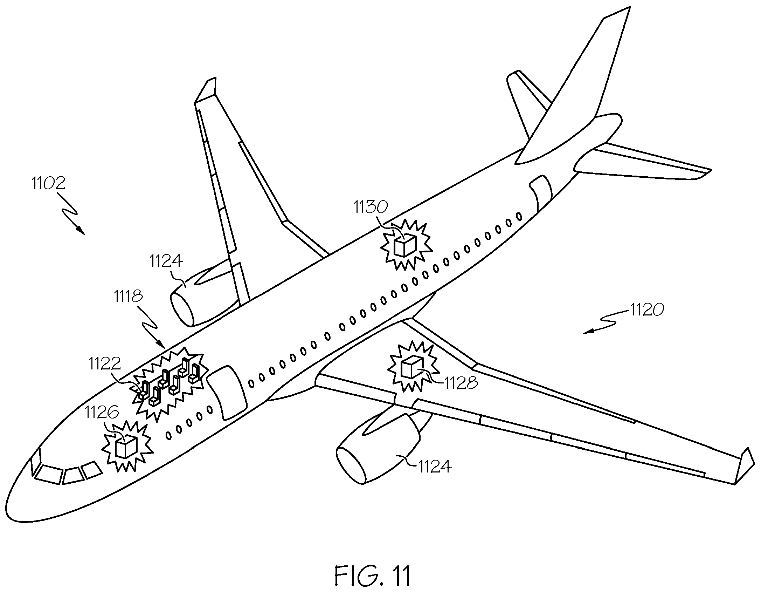

Examples of the disclosure may be described in the context of an aircraft manufacturing and service method 1100, as shown in Fig. 10, and an aircraft 1102, as shown in Fig. 11. During pre-production, the aircraft manufacturing and service method 1100 may include specification and design 1104 of the aircraft 1102 and material procurement 1106. During production, component/subassembly manufacturing 1108 and system integration 1110 of the aircraft 1102 takes place. Thereafter, the aircraft 1102 may go through certification and delivery 1112 in order to be placed in service 1114. While in service by a customer, the aircraft 1102 is scheduled for routine maintenance and service 1116, which may also include modification, reconfiguration, refurbishment and the like.

Each of the processes of method 1100 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in Fig. 11, the aircraft 1102 produced by example method 1100 may include an airframe 1118 with a plurality of systems 1120 and an interior 1122. Examples of the plurality of systems 1120 may include one or more of a propulsion system 1124, an electrical system 1126, a hydraulic system 1128, and an environmental system 1130. Any number of other systems may be included.

The disclosed apparatus and method may be employed during any one or more of the stages of the aircraft manufacturing and service method 1100. As one example, components or subassemblies corresponding to component/subassembly manufacturing 1108, system integration 1110, and/or maintenance and service 1116 may be assembled using the disclosed apparatus method. As another example, the airframe 1118 may be constructed using the disclosed apparatus and method. Also, one or more apparatus examples, method examples, or a combination thereof may be utilized during component/subassembly manufacturing 1108 and/or system integration 1110, for example, by substantially expediting assembly of or reducing the cost of an aircraft 1102, such as the airframe 1118 and/or the interior 1122. Similarly, one or more of system examples, method examples, or a combination thereof may be utilized while the aircraft 1102 is in service, for example and without limitation, to maintenance and service 1116.

Aspects of disclosed embodiments may be implemented in software, hardware, firmware, or a combination thereof. The various elements of the system, either individually or in combination, may be implemented as a computer program product (program of instructions) tangibly embodied in a machine-readable storage device (storage medium) for execution by a processor. Various steps of embodiments may be performed by a computer processor executing a program tangibly embodied on a computer-readable medium to perform functions by operating on input and generating output. The computer-readable medium may be, for example, a memory, a transportable medium such as a compact disk or a flash drive, such that a computer program embodying aspects of the disclosed embodiments can be loaded onto a computer.

An example for an electronically-controlled method for manufacturing a ceramic matrix composite structure with a desired shape according to the present disclosure (see for example figures 7, 8, 9) comprises the steps of processing (802) at a first location a plurality of ceramic matrix composite plies to form a stack of the plurality of ceramic matrix composite plies, transporting (804) the stack of plurality of ceramic matrix composite plies from the first location to a second location which is remote from the first location, and processing (806) at the second location the stack of plurality of ceramic matrix composite plies to provide the ceramic matrix composite structure with the desired shape. Positioning at the second location a vacuum membrane against the stack of the plurality of ceramic matrix composite plies to provide a vacuum-tight seal against the stack. This may involve drawing a vacuum to pull the vacuum membrane against the stack of the plurality of ceramic matrix composite plies and thereby to form shape of the stack at the second location. It may further also involve releasing the vacuum; and after the vacuum is released, providing the ceramic matrix composite structure with the desired shape. Preferably, each ply of the stack of the plurality of ceramic matrix composite plies comprises a matrix and fiber reinforcements within the matrix. The matrix may include a ceramic based material, and the fiber reinforcements within the matrix may include ceramic fibers. Each ply of the stack of the plurality of ceramic matrix composite plies may be provided with a ceramic matrix composite ply having a fabric that is pre-impregnated with a matrix material. Optionally, the method may involve orientating fiber reinforcements of each ply of the plurality of ceramic matrix composite plies of the stack such that the fiber reinforcements reinforce each other when the ceramic matrix composite structure with the desired shape is manufactured. It may further also involve (see for example figure 9) picking (902) a first ceramic matrix composite ply that is sandwiched between a first bottom backing film and a first top backing film, placing (904) the first ceramic matrix composite ply on a table surface at a first location, peeling (906) away the first top backing film from a top surface of the first ceramic matrix composite ply, picking (908) a second ceramic matrix composite ply that is sandwiched between a second bottom backing film and a second top backing film, peeling (910) away the second bottom backing film from a bottom surface of the second ceramic matrix composite ply, placing (912) the bottom surface of the second ceramic matrix composite ply on the top surface of the first ceramic matrix composite ply to form a stack comprising at least the first ceramic matrix composite ply and the second ceramic matrix composite ply, and transporting (914) the stack from the table surface at the first location to a tool surface at a second location which is different from the first location to enable the stack to be manufactured as the ceramic matrix composite structure with the desired shape at the second location. Preferably, it includes prior to transporting the stack from the table surface at the first location to the tool surface at the second location, peeling away the first bottom backing film from a bottom surface of the first ceramic matrix composite ply and/or includes, after transporting the stack from the table surface at the first location to the tool surface at the second location, forming shape of the stack to shape of the tool surface, and then peeling away the first bottom backing film from a bottom surface of the first ceramic matrix composite ply. Additionally, it may also involve positioning a vacuum membrane against the stack to provide a vacuum-tight seal against the stack. This may further involve drawing a vacuum to pull the vacuum membrane against the stack and thereby to form shape of the stack to shape of the tool surface at the second location and further optionally may involve releasing the vacuum, and after the vacuum is released, providing the ceramic matrix composite structure with multiple ceramic matrix composite plies with the desired shape. Optionally, (i) picking a first ceramic matrix composite ply that is sandwiched between a first bottom backing film and a first top backing film includes picking a first ceramic matrix composite ply having a first matrix and fiber reinforcements within the first matrix, and (ii) picking a second ceramic matrix composite ply that is sandwiched between a second bottom backing film and a second top backing film includes picking a second ceramic matrix composite ply having a second matrix and fiber reinforcements within the second matrix. Optionally, each of the first matrix and the second matrix contains a ceramic based material, and the fiber reinforcements within the first matrix and the second matrix contain ceramic fibers. Optionally, (i) picking a first ceramic matrix composite ply that is sandwiched between a first bottom backing film and a first top backing film includes picking a first ceramic matrix composite ply having a first fabric that is pre-impregnated with a matrix material, and (ii) picking a second ceramic matrix composite ply that is sandwiched between a second bottom backing film and a second top backing film includes picking a second ceramic matrix composite ply having a second fabric that is pre-impregnated with a matrix material. The example further may also involve orientating fiber reinforcements of each of the first ceramic matrix composite ply and the second ceramic matrix composite ply during placement of the first ceramic matrix composite ply and the second ceramic matrix composite ply on the table surface at the first location such that the fiber reinforcements reinforce each other when the ceramic matrix composite structure with the desired shape is manufactured.

Clearly, the abovementioned example can advantageously be used in the manufacturing of a portion of an aircraft or an aircraft part having a number of flanges. It may also advantageously be used for manufacturing a heat-shielding aircraft part.

In another example (see figures 7, 8, 9), the plies may contain at least a first non-polymer ply and a second non-polymer ply to manufacture a non-polymer structure. This includes transporting (702) a stack comprising at least a first non-polymer ply and a second non-polymer ply from a table surface at a first location to a tool surface at a second location, which is different from the first location, to enable the stack of at least the first non-polymer ply and the second non-polymer ply to be manufactured as the non-polymer structure with the desired shape at the second location. The transporting of the stack of at least the first non-polymer ply and the second non-polymer ply from the table surface at the first location to the tool surface at the second location may include transporting the stack of at least the first non-polymer ply and the second non-polymer ply from the table surface at the first location to the tool surface at the second location, wherein the first non-polymer ply and the second non-polymer ply comprise a ceramic matrix composite. Optionally or alternatively, it may include transporting the stack of at least the first non-polymer ply and the second non-polymer ply from the table surface at the first location to the tool surface at the second location. In addition, the transporting the stack of at least the first non-polymer ply and the second non-polymer ply from the table surface at the first location to the tool surface at the second location may include transporting a stack of at least first and second ceramic matrix composite plies having fiber reinforcements from the table surface at the first location to the tool surface at the second location. Optionally or alternatively , the transporting may be transporting a stack of at least the first non-polymer ply and the second non-polymer ply having a fabric that is pre-impregnated with a matrix material from the table surface at the first location to the tool surface at the second location. Preferably, after transporting the stack from the first location to the second location, steps of lowering the stack onto the tool surface at the second location and/or applying a vacuum to the stack of at least the first non-polymer ply and the second non-polymer ply to form a shaped stack that conforms to a shape of the tool surface and thereby to provide the non-polymer structure with the desired shape may be provided. Optionally, when applying a vacuum to the stack of at least first and second non-polymer plies of material, it is (further) improved by bagging the stack using a vacuum membrane. Prior to applying the vacuum, positioning a vacuum membrane onto the stack may be involved to provide a vacuum-tight seal against the first non-polymer ply and the second non-polymer ply. After applying the vacuum, it can be advantageous to peel away a backing film away from the shaped stack of at least the first non-polymer ply and the second non-polymer ply and preferably to each of the first non-polymer ply and the second non-polymer ply and the non-polymer structure to verify placement and compaction of the first non-polymer ply and the second non-polymer ply, and removal of the backing film. It is advantageous if weight of the non-polymer structure for a given volume of the non-polymer structure is less than weight of an equivalent volume of a metal structure. As with the earlier example, the example described above may advantageously also be used to manufacturing a portion of an aircraft and/or an aircraft part having a number of flanges. Additionally, it can advantageously be used to manufacturing a heat-shielding aircraft part.

The above-described apparatus and method are described in the context of an aircraft. However, one of ordinary skill in the art will readily recognize that the disclosed apparatus and method are suitable for a variety of applications, and the present disclosure is not limited to aircraft manufacturing applications. For example, the disclosed apparatus and method may be implemented in various types of vehicles including, for example, helicopters, passenger ships, automobiles, marine products (boat, motors, etc.) and the like. Non-vehicle applications are also contemplated.

Also, although the above-description describes an apparatus and method for manufacturing a ceramic matrix composite structure for an airplane part in the aviation industry in accordance with military and space regulations, it is contemplated that the apparatus and method may be implemented to facilitate manufacturing a ceramic matrix composite structure in any industry in accordance with the applicable industry standards. The specific apparatus and method can be selected and tailored depending upon the particular application.

Further, although various aspects of disclosed embodiments have been shown and described, modifications may occur to those skilled in the art upon reading the specification. The present application includes such modifications and is limited only by the scope of the claims.

## Claims

1. An electronically-controlled method (700, 800, 900) for manufacturing a ceramic matrix composite structure (500) with a desired shape, the electronically-controlled method comprising:
- processing (block 802) at a first location a plurality of ceramic matrix composite plies to form a stack (400) of the plurality of ceramic matrix composite plies (212, 222), wherein the processing comprises:
- picking (902) a first ceramic matrix composite ply (212) that is sandwiched between a first bottom backing film (213) and a first top backing film (211);
- placing (904) the first ceramic matrix composite ply (212) on a table surface (104) at a first location;
- peeling away (906) the first top backing film (211) from a top surface of the first ceramic matrix composite ply (212);
- picking (908) a second ceramic matrix composite ply (222) that is sandwiched between a second bottom backing film (223) and a second top backing film (221);
- peeling away (910) the second bottom backing film (223) from a bottom surface of the second ceramic matrix composite ply (222);
- placing (912) the bottom surface of the second ceramic matrix composite ply (222) on the top surface of the first ceramic matrix composite ply (212) to form a stack (400) comprising at least the first ceramic matrix composite ply (212) and the second ceramic matrix composite ply (222);
- transporting (block 804) the stack (400) of plurality of ceramic matrix composite plies (212, 222) from the first location to a second location which is remote from the first location, wherein the transporting comprises:
- transporting (914) the stack (400) from the table surface (104) at the first location to a tool surface (112) at a second location which is different from the first location to enable the stack (400) to be manufactured as the ceramic matrix composite structure (500) with the desired shape at the second location; and
- processing (block 804) at the second location the stack (400) of plurality of ceramic matrix composite plies (212, 222) to provide the ceramic matrix composite structure (500) with the desired shape.

2. The electronically-controlled method (700, 800, 900) of claim 1, further comprising positioning at the second location a vacuum membrane (142) against the stack (400) of the plurality of ceramic matrix composite plies (212, 222) to provide a vacuum-tight seal against the stack (400), and optionally further comprising drawing a vacuum to pull the vacuum membrane (142) against the stack (400) of the plurality of ceramic matrix composite plies (212, 222) and thereby to form shape of the stack (400) at the second location, and more further optionally comprising:
- releasing the vacuum; and
- after the vacuum is released, providing the ceramic matrix composite structure (500) with the desired shape.

3. The electronically-controlled method (700, 800, 900) according to any one of the preceding claims, wherein each ply of the stack (400) of the plurality of ceramic matrix composite plies (212, 222) comprises a matrix and fiber reinforcements (214, 224) within the matrix, and preferably wherein the matrix comprises a ceramic based material, and the fiber reinforcements within the matrix comprise ceramic fibers; and/or
wherein each ply of the stack (400) of the plurality of ceramic matrix composite plies (212, 222) comprises a ceramic matrix composite ply having a fabric that is pre-impregnated with a matrix material.

4. The electronically-controlled method (700, 800, 900) according to any one of the preceding claims, further comprising orientating fiber reinforcements (214, 224) of each ply of the plurality of ceramic matrix composite plies (212, 222) of the stack (400) such that the fiber reinforcements (214, 224) reinforce each other when the ceramic matrix composite structure (500) with the desired shape is manufactured.

5. The electronically-controlled method (700, 800, 900) of any one of the preceding claims, further comprising:
- prior to transporting the stack (400) from the table surface (104) at the first location to the tool surface (112) at the second location, peeling away the first bottom backing film (213) from a bottom surface of the first ceramic matrix composite ply (212); and/or
- after transporting the stack (400) from the table surface (104) at the first location to the tool surface (112) at the second location, forming shape of the stack (400) to shape of the tool surface (112), and then peeling away the first bottom backing film (213) from a bottom surface of the first ceramic matrix composite ply (212)..

6. The electronically-controlled method (700, 800, 900) of any one of the preceding claims, further comprising positioning a vacuum membrane (142) against the stack (400) to provide a vacuum-tight seal against the stack (400), and optionally
further comprising drawing a vacuum to pull the vacuum membrane (142) against the stack (400) and thereby to form shape of the stack (400) to shape of the tool surface (112) at the second location, and further optionally comprising:
- releasing the vacuum; and
- after the vacuum is released, providing the ceramic matrix composite structure (500) with multiple ceramic matrix composite plies (212, 222) with the desired shape.

7. The electronically-controlled method (700, 800, 900) of any one of the preceding claims, wherein (i) picking a first ceramic matrix composite ply (212) that is sandwiched between a first bottom backing film (213) and a first top backing film (211) includes picking a first ceramic matrix composite ply (212) having a first matrix and fiber reinforcements (214) within the first matrix, and (ii) picking a second ceramic matrix composite ply (222) that is sandwiched between a second bottom backing film (223) and a second top backing film (221) includes picking a second ceramic matrix composite ply (222) having a second matrix and fiber reinforcements (224) within the second matrix, and optionally wherein each of the first matrix and the second matrix comprises a ceramic based material, and the fiber reinforcements (214, 224) within the first matrix and the second matrix comprise ceramic fibers; and/or
wherein (i) picking a first ceramic matrix composite ply (212) that is sandwiched between a first bottom backing film (213) and a first top backing film (211) includes picking a first ceramic matrix composite ply (212) having a first fabric that is pre-impregnated with a matrix material, and (ii) picking a second ceramic matrix composite ply (222) that is sandwiched between a second bottom backing film (223) and a second top backing film (221) includes picking a second ceramic matrix composite ply (222) having a second fabric that is pre-impregnated with a matrix material.

8. The electronically-controlled method (700, 800, 900) of claim 7, further comprising orientating fiber reinforcements (214, 224) of each of the first ceramic matrix composite ply (212) and the second ceramic matrix composite ply (222) during placement of the first ceramic matrix composite ply (212) and the second ceramic matrix composite ply (222) on the table surface (104) at the first location such that the fiber reinforcements (214, 224) reinforce each other when the ceramic matrix composite structure (500) with the desired shape is manufactured.

9. The electronically-controlled method (700, 800, 900) of any one of the preceding claims, wherein the stack (400) comprises at least a first non-polymer ply (210) and a second non-polymer ply (220), and wherein the transporting comprises transporting (702) the stack (400) from a table surface (104) at a first location to a tool surface (112) at a second location, which is different from the first location, to enable the stack (400) of at least the first non-polymer ply (210) and the second non-polymer ply (220) to be manufactured as the non-polymer structure (500) with the desired shape at the second location; and optionally:
- wherein the transporting (702) the stack (400) of at least the first non-polymer ply (210) and the second non-polymer ply (220) from the table surface (104) at the first location to the tool surface (112) at the second location comprises transporting the stack (400) of at least the first non-polymer ply (210) and the second non-polymer ply (220) from the table surface (104) at the first location to the tool surface (112) at the second location, wherein the first non-polymer ply (210) and the second non-polymer ply (220) comprise a ceramic matrix composite; or
- wherein the transporting (702) the stack (400) of at least the first non-polymer ply (210) and the second non-polymer ply (220) from the table surface (104) at the first location to the tool surface (112) at the second location comprises transporting the stack (400) of at least the first non-polymer ply (210) and the second non-polymer ply (220) from the table surface (104) at the first location to the tool surface (112) at the second location; or
- wherein the transporting the stack (400) of at least the first non-polymer ply (210) and the second non-polymer ply (220) from the table surface (104) at the first location to the tool surface (112) at the second location includes transporting a stack (400) of at least first and second ceramic matrix composite plies (212, 222) having fiber reinforcements (214, 224) from the table surface (104) at the first location to the tool surface (112) at the second location.

10. The electronically-controlled method (700, 800, 900) of claim 9:
wherein the transporting the stack (400) of at least the first non-polymer ply (210) and the second non-polymer ply (220) from the table surface (104) at the first location to the tool surface (112) at the second location includes transporting a stack (400) of at least the first non-polymer ply (210) and the second non-polymer ply (220) having a fabric that is pre-impregnated with a matrix material from the table surface (104) at the first location to the tool surface (112) at the second location; and/or
further comprising after transporting the stack (400) from the first location to the second location, lowering the stack (400) onto the tool surface (112) at the second location.

11. The electronically-controlled method (700, 800, 900) of claim 9 or 10, further comprising:
applying a vacuum to the stack (400) of at least the first non-polymer ply (210) and the second non-polymer ply (220) to form a shaped stack (450) that conforms to a shape of the tool surface (112) and thereby to provide the non-polymer structure (500) with the desired shape.

12. The electronically-controlled method (700, 800, 900) of claim 11,
wherein applying a vacuum to the stack (400) of at least first and second non-polymer plies of material (210, 220) comprises bagging the stack (400) using a vacuum membrane (142); and/or
further comprising prior to applying the vacuum, positioning a vacuum membrane (142) onto the stack (400) to provide a vacuum-tight seal against the first non-polymer ply (210) and the second non-polymer ply (220); and/or
further comprising after applying the vacuum, peeling away a backing film (213, 221) away from the shaped stack (450) of at least the first non-polymer ply (210) and the second non-polymer ply (220), and optionally further comprising inspecting each of the first non-polymer ply (210) and the second non-polymer ply (220) and the non-polymer structure (500) to verify placement and compaction of the first non-polymer ply (210) and the second non-polymer ply (220), and removal of the backing film.

13. The electronically-controlled method (700, 800, 900) of any one of the claims 9 to 12 wherein weight of the non-polymer structure (500) for a given volume of the non-polymer structure (500) is less than weight of an equivalent volume of a metal structure.

14. Method for manufacturing a portion of an aircraft (500) using the electronically-controlled method of any one of the preceding claims.

15. Method for manufacturing an aircraft part (500) using the electronically-controlled method of any one of the claims 1 to 13, wherein:.
- the aircraft part (500) has a number of flanges (215, 225); or
- the aircraft part (500) comprises a heat-shielding aircraft part (500).

## Patentansprüche

1. Elektronisch gesteuertes Verfahren (700, 800, 900) zum Herstellen einer Keramikmatrixverbundstruktur (500) mit einer gewünschten Form, wobei das elektronisch gesteuerte Verfahren umfasst:
- Verarbeiten (Block 802) an einer ersten Stelle einer Vielzahl von Keramikmatrixverbundlagen zur Bildung eines Stapels (400) der Vielzahl von Keramikmatrixverbundlagen (212, 222), wobei das Verarbeiten umfasst:
- Auswählen (902) einer ersten Keramikmatrixverbundlage (212), die sandwichartig zwischen einer ersten unteren Trägerfolie (213) und einer ersten oberen Trägerfolie (211) angeordnet ist;
- Platzieren (904) der ersten Keramikmatrixverbundlage (212) auf einer Tischoberfläche (104) an einer ersten Stelle;
- Abziehen (906) der ersten oberen Trägerfolie (211) von einer oberen Oberfläche der ersten Keramikmatrixverbundlage (212);
- Auswählen (908) einer zweiten Keramikmatrixverbundlage (222), die sandwichartig zwischen einer zweiten unteren Trägerfolie (223) und einer zweiten oberen Trägerfolie (221) angeordnet ist;
- Abziehen (910) der zweiten unteren Trägerfolie (223) von einer unteren Oberfläche der zweiten Keramikmatrixverbundlage (222);
- Platzieren (912) der unteren Oberfläche der zweiten Keramikmatrixverbundlage (222) auf der oberen Oberfläche der ersten Keramikmatrixverbundlage (212), um einen Stapel (400) zu bilden, der mindestens die erste Keramikmatrixverbundlage (212) und die zweite Keramikmatrixverbundlage (222) umfasst;
- Transportieren (Block 804) des Stapels (400) aus einer Vielzahl von Keramikmatrixverbundlagen (212, 222) von der ersten Stelle zu einer zweiten Stelle, welche von der ersten Stelle entfernt ist, wobei das Transportieren umfasst:
- Transportieren (914) des Stapels (400) von der Tischoberfläche (104) an der ersten Stelle zu einer Werkzeugoberfläche (112) an einer zweiten Stelle, die sich von der ersten Stelle unterscheidet, um zu ermöglichen, dass der Stapel (400) als die Keramikmatrixverbundstruktur (500) mit der gewünschten Form an der zweiten Stelle hergestellt wird; und
- Verarbeiten (Block 804) an der zweiten Stelle des Stapels (400) aus einer Vielzahl von Keramikmatrixverbundlagen (212, 222), um die Keramikmatrixverbundstruktur (500) mit der gewünschten Form bereitzustellen.

2. Elektronisch gesteuertes Verfahren (700, 800, 900) nach Anspruch 1, ferner umfassend das Positionieren einer Vakuummembran (142) an der zweiten Stelle gegen den Stapel (400) der Vielzahl von Keramikmatrixverbundlagen (212, 222), um eine vakuumdichte Abdichtung gegen den Stapel (400) bereitzustellen, und optional ferner umfassend das Ziehen eines Vakuums, um die Vakuummembran (142) gegen den Stapel (400) der Vielzahl von Keramikmatrixverbundlagen (212, 222) zu ziehen und dadurch die Form des Stapels (400) an der zweiten Stelle zu bilden, und weiter optional umfassend:
- Freigeben des Vakuums; und
- nach dem Freigeben des Vakuums, Bereitstellen der Keramikmatrixverbundstruktur (500) mit der gewünschten Form.

3. Elektronisch gesteuertes Verfahren (700, 800, 900) nach einem der vorstehenden Ansprüche, wobei jede Lage des Stapels (400) der Vielzahl von Keramikmatrixverbundlagen (212, 222) eine Matrix und Faserverstärkungen (214, 224) innerhalb der Matrix umfasst, und vorzugsweise wobei die Matrix ein keramikbasiertes Material umfasst, und die Faserverstärkungen innerhalb der Matrix Keramikfasern umfassen; und/oder
wobei jede Lage des Stapels (400) der Vielzahl von Keramikmatrixverbundlagen (212, 222) eine Keramikmatrixverbundlage umfasst, die ein Gewebe aufweist, das mit einem Matrixmaterial vorimprägniert ist.

4. Elektronisch gesteuertes Verfahren (700, 800, 900) nach einem der vorstehenden Ansprüche, ferner umfassend das Orientieren von Faserverstärkungen (214, 224) jeder Lage der Vielzahl von Keramikmatrixverbundlagen (212, 222) des Stapels (400) derart, dass die Faserverstärkungen (214, 224) einander verstärken, wenn die Keramikmatrixverbundstruktur (500) mit der gewünschten Form hergestellt wird.

5. Elektronisch gesteuertes Verfahren (700, 800, 900) nach einem der vorstehenden Ansprüche, ferner umfassend:
- vor dem Transportieren des Stapels (400) von der Tischoberfläche (104) an der ersten Stelle zu der Werkzeugoberfläche (112) an der zweiten Stelle, Abziehen der ersten unteren Trägerfolie (213) von einer unteren Oberfläche der ersten Keramikmatrixverbundlage (212); und/oder
- nach dem Transportieren des Stapels (400) von der Tischoberfläche (104) an der ersten Stelle zu der Werkzeugoberfläche (112) an der zweiten Stelle, Formen der Form des Stapels (400) zu der Form der Werkzeugoberfläche (112), und dann Abziehen der ersten unteren Trägerfolie (213) von einer unteren Oberfläche der ersten Keramikmatrixverbundlage (212).

6. Elektronisch gesteuertes Verfahren (700, 800, 900) nach einem der vorstehenden Ansprüche, ferner umfassend das Positionieren einer Vakuummembran (142) gegen den Stapel (400), um eine vakuumdichte Abdichtung gegen den Stapel (400) bereitzustellen, und optional
ferner umfassend das Ziehen eines Vakuums, um die Vakuummembran (142) gegen den Stapel (400) zu ziehen und dadurch die Form des Stapels (400) an die Form der Werkzeugoberfläche (112) an der zweiten Stelle anzupassen, und ferner optional umfassend:
- Freigeben des Vakuums; und
- nach dem Freigeben des Vakuums, Bereitstellen der Keramikmatrixverbundstruktur (500) mit mehreren Keramikmatrixverbundlagen (212, 222) mit der gewünschten Form.

7. Elektronisch gesteuertes Verfahren (700, 800, 900) nach einem der vorstehenden Ansprüche, wobei (i) das Aufnehmen einer ersten Keramikmatrixverbundlage (212), die sandwichartig zwischen einer ersten unteren Trägerfolie (213) und einer ersten oberen Trägerfolie (211) angeordnet ist, das Aufnehmen einer ersten Keramikmatrixverbundlage (212) mit einer ersten Matrix und Faserverstärkungen (214) innerhalb der ersten Matrix einschließt, und (ii) das Aufnehmen einer zweiten Keramikmatrixverbundlage (222), die sandwichartig zwischen einer zweiten unteren Trägerfolie (223) und einer zweiten oberen Trägerfolie (221) angeordnet ist, das Aufnehmen einer zweiten Keramikmatrixverbundlage (222) mit einer zweiten Matrix und Faserverstärkungen (224) innerhalb der zweiten Matrix einschließt, und optional wobei jede der ersten Matrix und der zweiten Matrix ein keramikbasiertes Material einschließt, und die Faserverstärkungen (214, 224) innerhalb der ersten Matrix und der zweiten Matrix Keramikfasern umfassen; und/oder
wobei (i) das Aufnehmen einer ersten Keramikmatrixverbundlage (212), die sandwichartig zwischen einer ersten unteren Trägerfolie (213) und einer ersten oberen Trägerfolie (211) angeordnet ist, das Aufnehmen einer ersten Keramikmatrixverbundlage (212) mit einem ersten Gewebe einschließt, das mit einem Matrixmaterial vorimprägniert ist, und (ii) das Aufnehmen einer zweiten Keramikmatrixverbundlage (222), die sandwichartig zwischen einer zweiten unteren Trägerfolie (223) und einer zweiten oberen Trägerfolie (221) angeordnet ist, das Aufnehmen einer zweiten Keramikmatrixverbundlage (222) mit einem zweiten Gewebe einschließt, das mit einem Matrixmaterial vorimprägniert ist.

8. Elektronisch gesteuertes Verfahren (700, 800, 900) nach Anspruch 7, ferner umfassend das Orientieren von Faserverstärkungen (214, 224) von sowohl der ersten Keramikmatrixverbundlage (212) als auch der zweiten Keramikmatrixverbundlage (222) während der Platzierung der ersten Keramikmatrixverbundlage (212) und der zweiten Keramikmatrixverbundlage (222) auf der Tischoberfläche (104) an der ersten Stelle derart, dass die Faserverstärkungen (214, 224) einander verstärken, wenn die Keramikmatrixverbundstruktur (500) mit der gewünschten Form hergestellt wird.

9. Elektronisch gesteuertes Verfahren (700, 800, 900) nach einem der vorstehenden Ansprüche, wobei der Stapel (400) mindestens eine erste Nicht-Polymer-Lage (210) und eine zweite Nicht-Polymer-Lage (220) umfasst, und wobei das Transportieren das Transportieren (702) des Stapels (400) von einer Tischoberfläche (104) an einer ersten Stelle zu einer Werkzeugoberfläche (112) an einer zweiten Stelle umfasst, der sich von der ersten Stelle unterscheidet, um zu ermöglichen, dass der Stapel (400) aus mindestens der ersten Nicht-Polymer-Lage (210) und der zweiten Nicht-Polymer-Lage (220) als die Nicht-Polymer-Struktur (500) mit der gewünschten Form an der zweiten Stelle hergestellt wird; und optional:
- wobei das Transportieren (702) des Stapels (400) von mindestens der ersten Nicht-Polymer-Lage (210) und der zweiten Nicht-Polymer-Lage (220) von der Tischoberfläche (104) an der ersten Stelle zu der Werkzeugoberfläche (112) an der zweiten Stelle das Transportieren des Stapels (400) von mindestens der ersten Nicht-Polymer-Lage (210) und der zweiten Nicht-Polymer-Lage (220) von der Tischoberfläche (104) an der ersten Stelle zu der Werkzeugoberfläche (112) an der zweiten Stelle umfasst, wobei die erste Nicht-Polymer-Lage (210) und die zweite Nicht-Polymer-Lage (220) einen Keramikmatrixverbundstoff umfassen; oder
- wobei das Transportieren (702) des Stapels (400) von mindestens der ersten Nicht-Polymer-Lage (210) und der zweiten Nicht-Polymer-Lage (220) von der Tischoberfläche (104) an der ersten Stelle zu der Werkzeugoberfläche (112) an der zweiten Stelle das Transportieren des Stapels (400) von mindestens der ersten Nicht-Polymer-Lage (210) und der zweiten Nicht-Polymer-Lage (220) von der Tischoberfläche (104) an der ersten Stelle zu der Werkzeugoberfläche (112) an der zweiten Stelle umfasst; oder
- wobei das Transportieren des Stapels (400) von mindestens der ersten Nicht-Polymer-Lage (210) und der zweiten Nicht-Polymer-Lage (220) von der Tischoberfläche (104) an der ersten Stelle zu der Werkzeugoberfläche (112) an der zweiten Stelle das Transportieren eines Stapels (400) von mindestens ersten und zweiten Keramikmatrixverbundlagen (212, 222) mit Faserverstärkungen (214, 224) von der Tischoberfläche (104) an der ersten Stelle zu der Werkzeugoberfläche (112) an der zweiten Stelle einschließt.

10. Elektronisch gesteuertes Verfahren (700, 800, 900) nach Anspruch 9:
wobei das Transportieren des Stapels (400) von mindestens der ersten Nicht-Polymer-Lage (210) und der zweiten Nicht-Polymer-Lage (220) von der Tischoberfläche (104) an der ersten Stelle zu der Werkzeugoberfläche (112) an der zweiten Stelle das Transportieren eines Stapels (400) von mindestens der ersten Nicht-Polymer-Lage (210) und der zweiten Nicht-Polymer-Lage (220) mit einem Gewebe, das mit einem Matrixmaterial vorimprägniert ist, von der Tischoberfläche (104) an der ersten Stelle zu der Werkzeugoberfläche (112) an der zweiten Stelle einschließt; und/oder
ferner umfassend nach dem Transportieren des Stapels (400) von der ersten Stelle zu der zweiten Stelle, Absenken des Stapels (400) auf die Werkzeugoberfläche (112) an der zweiten Stelle.

11. Elektronisch gesteuertes Verfahren (700, 800, 900) nach Anspruch 9 oder 10, ferner umfassend: Anlegen eines Vakuums an den Stapel (400) aus mindestens der ersten Nicht-Polymer-Lage (210) und der zweiten Nicht-Polymer-Lage (220), um einen geformten Stapel (450) zu bilden, der sich an eine Form der Werkzeugoberfläche (112) anpasst und dadurch der Nicht-Polymer-Struktur (500) die gewünschte Form bereitzustellen.

12. Elektronisch gesteuertes Verfahren (700, 800, 900) nach Anspruch 11,
wobei das Anlegen eines Vakuums an den Stapel (400) aus mindestens ersten und zweiten Nicht-Polymer-Lagen aus Material (210, 220) das Einbeuteln des Stapels (400) unter Verwendung einer Vakuummembran (142) umfasst; und/oder
ferner umfassend vor dem Anlegen des Vakuums das Positionieren einer Vakuummembran (142) auf den Stapel (400), um eine vakuumdichte Abdichtung gegen die erste Nicht-Polymer-Lage (210) und die zweite Nicht-Polymer-Lage (220) bereitzustellen; und/oder
ferner umfassend nach dem Anlegen des Vakuums das Abziehen einer Trägerfolie (213, 221) von dem geformten Stapel (450) aus mindestens der ersten Nicht-Polymer-Lage (210) und der zweiten Nicht-Polymer-Lage (220), und optional ferner umfassend das Inspizieren jeder der ersten Nicht-Polymer-Lage (210) und der zweiten Nicht-Polymer-Lage (220) und der Nicht-Polymer-Struktur (500), um die Platzierung und Verdichtung der ersten Nicht-Polymer-Lage (210) und der zweiten Nicht-Polymer-Lage (220) und die Entfernung der Trägerfolie zu verifizieren.

13. Elektronisch gesteuertes Verfahren (700, 800, 900) nach einem der Ansprüche 9 bis 12, wobei das Gewicht der Nicht-Polymer-Struktur (500) für ein gegebenes Volumen der Nicht-Polymer-Struktur (500) geringer ist als das Gewicht eines äquivalenten Volumens einer Metallstruktur.

14. Verfahren zum Herstellen eines Abschnitts eines Luftfahrzeugs (500) unter Verwendung des elektronisch gesteuerten Verfahrens nach einem der vorstehenden Ansprüche.

15. Verfahren zum Herstellen eines Flugzeugteils (500) unter Verwendung des elektronisch gesteuerten Verfahrens nach einem der Ansprüche 1 bis 13, wobei:
- das Flugzeugteil (500) eine Anzahl von Flanschen (215, 225) aufweist; oder
- das Flugzeugteil (500) ein wärmeschützendes Flugzeugteil (500) umfasst.

## Revendications

1. Procédé à commande électronique (700, 800, 900) destiné à fabriquer une structure composite à matrice céramique (500) ayant une forme souhaitée, le procédé à commande électronique comprenant :
- le traitement (bloc 802), au niveau d'un premier emplacement, d'une pluralité de plis composites à matrice céramique afin de former un empilement (400) de la pluralité de plis composites à matrice céramique (212, 222), dans lequel le traitement comprend :
- la sélection (902) d'un premier pli composite à matrice céramique (212) qui est prise en sandwich entre un premier film de support inférieur (213) et un premier film de support supérieur (211) ;
- le placement (904) du premier pli composite à matrice céramique (212) sur une surface de table (104) au niveau d'un premier emplacement ;
- le retrait (906) du premier film de support supérieur (211) d'une surface supérieure du premier pli composite à matrice céramique (212) ;
- la sélection (908) d'un second pli composite à matrice céramique (222) qui est prise en sandwich entre un second film de support inférieur (223) et un second film de support supérieur (221) ;
- le retrait (910) du second film de support inférieur (223) d'une surface inférieure du second pli composite à matrice céramique (222) ;
- le placement (912) de la surface inférieure du second pli composite à matrice céramique (222) sur la surface supérieure du premier pli composite à matrice céramique (212) afin de former un empilement (400) comprenant au moins le premier pli composite à matrice céramique (212) et le second pli composite à matrice céramique (222) ;
- le transport (bloc 804) de l'empilement (400) d'une pluralité de plis composites à matrice céramique (212, 222) à partir du premier emplacement vers un second emplacement qui est éloigné du premier emplacement, dans lequel le transport comprend :
- le transport (914) de l'empilement (400) à partir de la surface de table (104) au niveau du premier emplacement vers une surface d'outil (112) au niveau d'un second emplacement qui est différent du premier emplacement afin de permettre à l'empilement (400) d'être fabriqué en tant que structure composite à matrice céramique (500) ayant la forme souhaitée au niveau du second emplacement ; et
- le traitement (bloc 804), au niveau du second emplacement, de l'empilement (400) d'une pluralité de plis composites à matrice céramique (212, 222) afin de fournir la structure composite à matrice céramique (500) ayant la forme souhaitée.

2. Procédé à commande électronique (700, 800, 900) selon la revendication 1, comprenant en outre le positionnement, au niveau du second emplacement, d'une membrane sous vide (142) contre l'empilement (400) de la pluralité de plis composites à matrice céramique (212, 222) afin de fournir un joint étanche au vide contre l'empilement (400), et optionnellement comprenant en outre la production d'un vide afin de tirer la membrane sous vide (142) contre l'empilement (400) de la pluralité de plis composites à matrice céramique (212, 222) et de produire ainsi une forme de l'empilement (400) au niveau du second emplacement, et plus encore optionnellement, comprenant :
- la libération du vide ; et
- après la libération du vide, la fourniture de la structure composite à matrice céramique (500) ayant la forme souhaitée.

3. Procédé à commande électronique (700, 800, 900) selon l'une quelconque des revendications précédentes, dans lequel chaque pli de l'empilement (400) de la pluralité de plis composites à matrice céramique (212, 222) comprend une matrice et des renforts en fibres (214, 224) à l'intérieur de la matrice, et de préférence, dans lequel la matrice comprend un matériau à base de céramique, et les renforts en fibres à l'intérieur de la matrice comprennent des fibres céramiques ; et/ou
dans lequel chaque pli de l'empilement (400) de la pluralité de plis composites à matrice céramique (212, 222) comprend un pli composite à matrice céramique ayant un tissu qui est pré-imprégné avec un matériau de matrice.

4. Procédé à commande électronique (700, 800, 900) selon l'une quelconque des revendications précédentes, comprenant en outre l'orientation de renforts en fibres (214, 224) de chaque pli de la pluralité de plis composites à matrice céramique (212, 222) de l'empilement (400) de sorte que les renforts en fibres (214, 224) se renforcent mutuellement lorsque la structure composite à matrice céramique (500) ayant la forme souhaitée est fabriquée.

5. Procédé à commande électronique (700, 800, 900) selon l'une quelconque des revendications précédentes, comprenant en outre :
- avant le transport de l'empilement (400) à partir de la surface de table (104) au niveau du premier emplacement vers la surface d'outil (112) au niveau du second emplacement, le retrait du premier film de support inférieur (213) d'une surface inférieure du premier pli composite à matrice céramique (212) ; et/ou
- après le transport de l'empilement (400) à partir de la surface de table (104) au niveau du premier emplacement vers la surface d'outil (112) au niveau du second emplacement, la production d'une forme de l'empilement (400) à une forme de la surface d'outil (112), et ensuite, le retrait du premier film de support inférieur (213) d'une surface inférieure du premier pli composite à matrice céramique (212).

6. Procédé à commande électronique (700, 800, 900) selon l'une quelconque des revendications précédentes, comprenant en outre le positionnement d'une membrane sous vide (142) contre l'empilement (400) afin de fournir un joint étanche au vide contre l'empilement (400), et optionnellement
comprenant en outre la production d'un vide afin de tirer la membrane sous vide (142) contre l'empilement (400) et de produire une forme de l'empilement (400) à une forme de la surface d'outil (112) au niveau du second emplacement, et optionnellement comprenant en outre :
- la libération du vide ; et
- après la libération du vide, la fourniture de la structure composite à matrice céramique (500) avec de multiples plis composites à matrice céramique (212, 222) ayant la forme souhaitée.

7. Procédé à commande électronique (700, 800, 900) selon l'une quelconque des revendications précédentes, dans lequel (i) la sélection d'un premier pli composite à matrice céramique (212) qui est prise en sandwich entre un premier film de support inférieur (213) et un premier film de support supérieur (211) comporte la sélection d'un premier pli composite à matrice céramique (212) ayant une première matrice et des renforts en fibres (214) à l'intérieur de la première matrice, et (ii) la sélection d'un second pli composite à matrice céramique (222) qui est prise en sandwich entre un second film de support inférieur (223) et un second film de support supérieur (221) comporte la sélection d'un second pli composite à matrice céramique (222) ayant une seconde matrice et des renforts en fibres (224) à l'intérieur de la seconde matrice, et optionnellement, dans lequel chacune de la première matrice et de la seconde matrice comprend un matériau à base céramique, et les renforts en fibres (214, 224) à l'intérieur de la première matrice et de la seconde matrice comprennent des fibres céramiques ; et/ou
dans lequel (i) la sélection d'un premier pli composite à matrice céramique (212) qui est prise en sandwich entre un premier film de support inférieur (213) et un premier film de support supérieur (211) ; comporte la sélection d'un premier pli composite à matrice céramique (212) ayant un premier tissu qui est pré-imprégné avec un matériau de matrice, et (ii) la sélection d'un second pli composite à matrice céramique (222) qui est prise en sandwich entre un second film de support inférieur (223) et un second film de support supérieur (221) comporte la sélection d'un second pli composite à matrice céramique (222) ayant un second tissu qui est pré-imprégné avec un matériau de matrice.

8. Procédé à commande électronique (700, 800, 900) selon la revendication 7, comprenant en outre l'orientation de renforts en fibres (214, 224) de chacune du premier pli composite à matrice céramique (212) et du second pli composite à matrice céramique (222) pendant le placement du premier pli composite à matrice céramique (212) et du second pli composite à matrice céramique (222) sur la surface de table (104) au niveau du premier emplacement, de sorte que les renforts en fibres (214, 224) se renforcent mutuellement lorsque la structure composite à matrice céramique (500) ayant la forme souhaitée est fabriquée.

9. Procédé à commande électronique (700, 800, 900) selon l'une quelconque des revendications précédentes, dans lequel l'empilement (400) comprend au moins un premier pli non polymère (210) et un second pli non polymère (220), et dans lequel le transport comprend le transport (702) de l'empilement (400) à partir d'une surface de table (104) au niveau du premier emplacement vers une surface d'outil (112) au niveau d'un second emplacement, qui est différent du premier emplacement, afin de permettre à l'empilement (400) d'au moins le premier pli non polymère (210) et le second pli non polymère (220) d'être fabriqué en tant que structure non polymère (500) ayant la forme souhaitée au niveau du second emplacement ; et éventuellement :
- dans lequel le transport (702) de l'empilement (400) d'au moins le premier pli non polymère (210) et le second pli non polymère (220) à partir de la surface de table (104) au niveau du premier emplacement vers la surface d'outil (112) au niveau du second emplacement comprend le transport de l'empilement (400) d'au moins le premier pli non polymère (210) et le second pli non polymère (220) à partir de la surface de table (104) au niveau du premier emplacement vers la surface d'outil (112) au niveau du second emplacement, dans lequel le premier pli non polymère (210) et le second pli non polymère (220) comprennent un composite à matrice céramique ; ou
- dans lequel le transport (702) de l'empilement (400) d'au moins le premier pli non polymère (210) et le second pli non polymère (220) à partir de la surface de table (104) au niveau du premier emplacement vers la surface d'outil (112) au niveau du second emplacement comprend le transport de l'empilement (400) d'au moins le premier pli non polymère (210) et le second pli non polymère (220) à partir de la surface de table (104) au niveau du premier emplacement vers la surface d'outil (112) au niveau du second emplacement ; ou
- dans lequel le transport de l'empilement (400) d'au moins le premier pli non polymère (210) et le second pli non polymère (220) à partir de la surface de table (104) au niveau du premier emplacement vers la surface d'outil (112) au niveau du second emplacement comporte le transport d'un empilement (400) d'au moins des premier et second plis composites à matrice céramique (212, 222) ayant des renforts en fibre (214, 224) à partir de la surface de table (104) au niveau du premier emplacement vers la surface d'outil (112) au niveau du second emplacement.

10. Procédé à commande électronique (700, 800, 900) selon la revendication 9 :
dans lequel le transport de l'empilement (400) d'au moins le premier pli non polymère (210) et le second pli non polymère (220) à partir de la surface de table (104) au niveau du premier emplacement vers la surface d'outil (112) au niveau du second emplacement comporte le transport d'un empilement (400) d'au moins le premier pli non polymère (210) et le second pli non polymère (220) ayant un premier tissu qui est pré-imprégné avec un matériau de matrice à partir de la surface de table (104) au niveau du premier emplacement vers la surface d'outil (112) au niveau du second emplacement ; et/ou
comprenant en outre, après le transport de l'empilement (400) à partir du premier emplacement vers le second emplacement, l'abaissement de l'empilement (400) sur la surface d'outil (112) au niveau du second emplacement.

11. Procédé à commande électronique (700, 800, 900) selon la revendication 9 ou 10, comprenant en outre : l'application d'un vide à l'empilement (400) d'au moins le premier pli non polymère (210) et le second pli non polymère (220) afin de former un empilement façonné (450) qui se conforme à une forme de la surface d'outil (112) et de fournir ainsi la structure non polymère (500) ayant la forme souhaitée.

12. Procédé à commande électronique (700, 800, 900) selon la revendication 11 :
dans lequel l'application d'un vide à l'empilement (400) d'au moins des premier et second plis non polymère (210, 220) de matériau comprend l'ensachage de l'empilement (400) à l'aide d'une membrane sous vide (142) ; et/ou
comprenant en outre, avant l'application du vide, le positionnement d'une membrane sous vide (142) sur l'empilement (400) afin de fournir un joint étanche au vide contre le premier pli non polymère (210) et le second pli non polymère (220) ; et/ou
comprenant en outre, après l'application du vide, le retrait d'un film de support (213, 221) de l'empilement façonné (450) d'au moins le premier pli non polymère (210) et le second pli non polymère (220), et optionnellement comprenant en outre l'inspection de chacun du premier pli non polymère (210) et du second pli non polymère (220) et de la structure non polymère (500) afin de vérifier le placement et le compactage du premier pli non polymère (210) et du second pli non polymère (220), et le retrait du film de support.

13. Procédé à commande électronique (700, 800, 900) selon l'une quelconque des revendications 9 à 12, dans lequel un poids de la structure non polymère (500) pour un volume donné de la structure non polymère (500) est inférieur à un poids d'un volume équivalent d'une structure métallique.

14. Procédé de fabrication d'une partie d'un aéronef (500) à l'aide du procédé selon l'une quelconque des revendications précédentes.

15. Procédé de fabrication d'une pièce d'aéronef (500) à l'aide du procédé à commande électronique selon l'une quelconque des revendications 1 à 13, dans lequel :
- la pièce d'aéronef (500) a un certain nombre de rebords (215, 225) ; ou
- la pièce d'aéronef (500) comprend une pièce d'aéronef (500) de protection thermique.
